# EUROPÄISCHE PATENTSCHRIFT

(11) **EP 0 373 418 B1**
(45) Veröffentlichungstag und Bekanntmachung des Hinweises auf die Patenterteilung: **23.02.1994**
(21) Anmeldenummer: 89121993.3
(22) Anmeldetag: 29.11.1989
(51) Int. Cl.: G21C 3/32

(54) **Brennstab für ein Brennelement eines Druckwasser-Kernreaktors**
Fuel rod for a nuclear pressurized water reactor fuel assembly
Crayon de combustible pour assemblage de combustible d'un réacteur nucléaire à eau pressurisée

(30) Priorität: 12.12.1988 DE 8815433 U
(43) Veröffentlichungstag der Anmeldung: 20.06.1990
(73) Patentinhaber: SIEMENS AKTIENGESELLSCHAFT, 80333 München (DE)
(72) Erfinder: Holzer, Rolf, D-8520 Erlangen (DE); Holley, Heinz-Peter, Dr., D-8550 Forchheim (DE); Lill, Günther, Dr., D-8522 Herzogenaurach (DE); Neufert, Alfred, Dr., D-8521 Langensendelbach (DE); Schricker, Wolfgang, D-8501 Schwaig (DE); Suchy, Peter, D-8520 Erlangen (DE)

(56) Entgegenhaltungen:
- ENERGIEWIRTSCHAFTLICHE TAGESFRAGEN, Band 35, Nr. 12, 1985, Seminar Brennstoffkreislauf, Seiten 912-918; P. SCHMIEDEL: "Stets auf Verbesserungssuche"
- NUCLEAR ENGINEERING INTERNATIONAL, Band 32, Nr. 393, April 1987, Seiten 21,22, Sutton, Surrey, GB; "Developing the "tight lattice" concept for advanced LWRS"
- NUCLEAR TECHNOLOGY, Band 79, Nr. 1, Oktober 1987, Seiten 20-23, La Grange Park, Illinois, US; Y. RONEN et al.: "The multispectrum high convertor water reactor"

## Beschreibung

Die Erfindung bezieht sich auf einen Brennstab für ein Brennelement eines Druckwasser-Kernreaktors, welcher Brennstab ein Hüllrohr von vorgegebenem Außendurchmesser und von vorgegebenem Innendurchmesser sowie im Hüllrohr enthaltene Pellets von vorgegebenem Außendurchmesser umfaßt, und welcher Brennstab im Brennelement in einem vorgegebenen Mittelpunktsabstand zum benachbarten Brennstab anzuordnen ist.

Ein solcher Brennstab ist in verschiedenen Ausführungsformen bei Brennelementen im Stand der Technik (R. Holzer, H. Knaab: Recent Fuel Performance Experience and Implementation of Improved Products, ANS-Topical Meeting on LWR Fuel Performance, Williamsburg, Va., USA, 17.-20.04.1988; P. Schmiedel: Brennelemente für Leichtwasserreaktoren: Stets auf Verbesserungssuche, "Energiewirtschaftliche Tagesfragen", 35. Jg. (1985), H. 12, S. 912-919) bekannt. Ein erster Brennstab besitzt danach einen Außendurchmesser von 9,50 mm, einen Innendurchmesser von 8,22 mm und einen Durchmesser D der zylindrischen Tabletten oder Pellets von D = 8,05 mm; die einzelnen Brennstäbe sind in einem gegenseitigen Abstand der Mittelpunkte von p = 12,7 mm angeordnet. Ein zweiter Brennstab dieser Art besitzt einen Außendurchmesser von dₐ = 10,75 mm, einen Innendurchmesser von dᵢ= 9,30 mm und einen Durchmesser D der Pellets von D = 9,11 mm; der Mittelpunktsabstand p der einzelnen Brennstäbe im Brennelement beträgt p = 14,3 mm. Aus diesen Werten ergibt sich, daß im Stand der Technik das Verhältnis p/dₐ im Bereich von 1,32 bis 1,33 liegt. Dieses Verhältnis gilt nicht nur für die Brennstäbe dieser auf dem Markt von einem bestimmten Hersteller angebotenen Typen, sondern auch für die Ausführungsformen anderer Hersteller.

In der Reaktortechnik hat man sich zum Ziel gesetzt, die Brennelemente in verschiedener Hinsicht zu verbessern, und zwar insbesondere hinsichtlich der Thermohydraulik und der Neutronenökonomie. Auf dem Gebiet der Thermohydraulik wird eine Verkleinerung des Druckverlustes und eine Verbesserung des Filmsiedeabstandes angestrebt. Auf dem Gebiet der Neutronenökonomie geht es um eine Verbesserung des Moderationsverhältnisses und um eine Verringerung der Neutronenabsorbtion durch das Strukturmaterial, d. h. insbesondere das Hüllrohrmaterial.

Im Stand der Technik ist bereits eine spezielle Lösung bekannt geworden (P. C. Warner, W. L. Orr; VANTAGE 5, PWR Fuel Assembly Demonstration Program, APC, Chicago, USA, 22.-24.04.1985), bei der gegenüber anderen herkömmlichen Ausführungsformen eine Verringerung des Außendurchmessers und des Innendurchmessers der Hüllrohre sowie gleichzeitig eine Verringerung des Tablettendurchmessers D vorgenommen wurde. Bei dieser speziellen Lösung sind die Werte dₐ = 9,14 mm, dᵢ = 8,00 mm und D = 7,84 mm gewählt worden. Aus diesen Werten errechnet sich - unter Zugrundelegung des gewählten Abstands der Mittelpunkte der Brennstäbe - ein Verhältnis p/dₐ = 1,38 bis 1,41. Dieser Wert liegt also um einiges über dem oben erwähnten Wert von 1,32 bis 1,33.

Die genannte spezielle Lösung hat zur Folge, daß der Druckverlust verkleinert werden kann; der Filmsiedeabstand wird jedoch signifikant verschlechtert. Das Moderationsverhalten wird durch die getroffenen Maßnahmen deutlich verbessert, ebenso die Neutronenabsorbtion. Nachteilig bei der speziellen Lösung ist jedoch, daß sich wegen der Verringerung des Außendurchmessers D der Pellets nur eine verhältnismäßig geringe Brennstoffmasse im einzelnen Brennstab unterbringen läßt. Das wiederum hat zur Folge, daß sich eine Vergrößerung der Nachlademenge oder aber eine Verringerung der Zykluszahl (= Verhältnis von Gesamtzahl der Brennelemente im Kern zur Anzahl der nachgeladenen Brennelemente pro Zyklus) ergibt, woraus eine relativ schlechte Brennstoffausnutzung resultiert. Darüber hinaus ergeben sich bei dieser speziellen Lösung höhere spezifische Brennelement-Fabrikationskosten, d. h. Fabrikationskosten pro Kilogramm Uranoxid. Als gewichtiger Nachteil ist weiterhin zu verzeichnen, daß bei der bekannten Lösung eine Umstellung der Pellet-Fertigung auf andere Durchmesser erforderlich ist. Schließlich ist auch noch anzumerken, daß erhebliche spezifische Entsorgungskosten, ausgedrückt in Geldeinheiten pro Brennelement, zu verzeichnen sein können.

Der Erfindung liegt die Aufgabe zugrunde, einen Brennstab der eingangs genannten Art so auszugestalten, daß sich eine Verbesserung der Thermohydraulik und der Neutronenökonomie ergibt, ohne daß auf andere Pellet-Durchmesser bei der Fertigung übergegangen zu werden braucht. Gegenüber der herkömmlichen Brennstabausführung sollen sich somit keine Verringerungen der Brennstoffmasse pro Brennstab sowie die daraus resultierenden Nachteile ergeben. Darüber hinaus sollen die spezifischen Entsorgungskosten relativ gering sein.

Diese Aufgabe wird gemäß der Erfindung dadurch gelöst, daß das Verhältnis zwischen dem vorgegebenen Mittelpunktsabstand und dem Außendurchmesser des Hüllrohrs im Bereich von p/dₐ = 1,35 bis 1,37 liegt. Die bisherigen Pelletdurchmesser D = 8,05 mm oder D = 9,11 mm bleiben damit erhalten.

Gegenüber der oben angeführten speziellen Lösung wird also vorliegend der Durchmesser D der einzelnen Pellets konstant gehalten. Bei einem unverändert gelassenen Innendurchmesser dᵢ des Hüllrohres wird lediglich dessen Außendurchmesser dₐ verringert.

Nach einer besonders bevorzugten Ausführungsform beträgt der vorgegebene Außendurchmesser des Hüllrohres 9,36 mm oder 10,53 mm. Die gebräuchlichen Durchmesser sind also vorliegend von 9,50 auf 9,36 mm bzw. von 10,75 auf 10,53 mm reduziert worden.

Bevorzugt wird der Mittelpunktsabstand p zu p = 12,7 mm oder 14,3 mm gewählt.

Von besonderem Vorzug ist es auch, wenn ein Standard-Innendurchmesser von dᵢ = 8,22 mm oder dᵢ = 9,30 mm gewählt wird. In diesem Fall kann der Außendurchmesser D der einzelnen Pellets etwa gleich 8,05 mm bzw. 9,11 mm betragen. Pellets mit diesen Dimensionen sind auf dem Markt leicht erhältlich. Es muß also nicht auf ungebräuchliche Pellet-Dimensionierungen zurückgegriffen werden.

Ein Ausführungsbeispiel der Erfindung wird im folgenden anhand einer Figur näher erläutert.

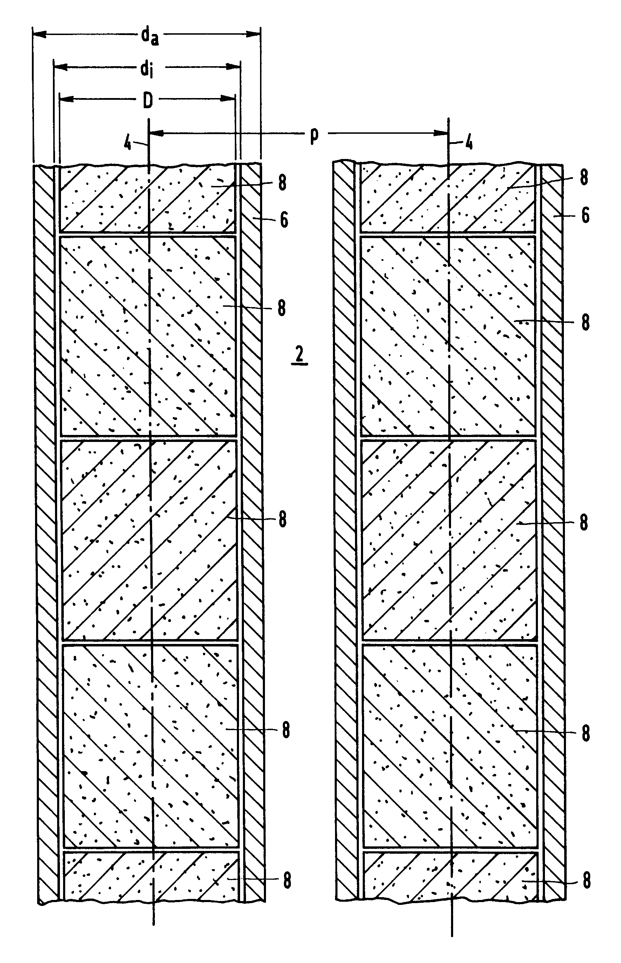

Die Figur zeigt im Schnitt einen Ausschnitt aus zwei benachbarten Brennstäben eines Brennelements für einen Druckwasser-Kernreaktor.

Nach der Figur umfaßt der linke Brennstab 2, dessen Zentralachse mit 4 bezeichnet ist, ein Hüllrohr 6, beispielsweise aus Zircaloy, und eine Anzahl von Pellets oder Brennstofftabletten 8 aus Uran- oder Plutoniumoxid. Diese Pellets 8 haben einen Außendurchmesser D, der der konventionellen Dimensionierung D = 8,05 mm oder D = 9,11 mm entspricht. Der Innendurchmesser dᵢ des Hüllrohres 6 beträgt vorliegend dᵢ = 8,22 mm oder 9,30 mm, besitzt also ebenfalls eine konventionelle Dimensionierung. Anzumerken und hervorzuheben ist, daß der Außendurchmesser dₐ des Hüllrohres 6 kleiner als im Stand der Technik ist. Er ist vorliegend zu dₐ = 9,36 mm bzw. 10,53 mm gewählt.

Der Abstand p des Mittelpunkts zum rechts benachbarten, gleichartigen Brennstab 2 ist mit p angegeben. Dieser Abstand beträgt p = 12,7 bzw. 14,3 mm. Auch hierbei handelt es sich um konventionelle Werte. Es ergibt sich aus den genannten Werten ein Verhältnis von p/dₐ, das im Bereich von 1,35 bis 1,37 liegt. Vorliegend ergeben sich Werte von 1,357 bzw. 1,358.

Mit den angegebenen Werten von p, dₐ, dᵢ, D ergeben sich günstige Eigenschaften hinsichtlich des thermohydraulischen Verhaltens und eine gute Neutronenökonomie im Brennelement. Insbesondere sind gegenüber der eingangs genannten Lösung eine (ausreichende) Verbesserung des Druckverlustes und nur eine geringfügige Verschlechterung des Filmsiedeabstands zu verzeichnen. Darüber hinaus sind auch eine geringfügige Verbesserung des Moderationsverhältnisses sowie eine deutliche Verringerung der Neutronenabsorption zu beobachten. Bedeutsam ist, daß in Brennelementen, bei denen eine Anzahl von Brennstäben 2 der gezeichneten Art parallel zueinander in einer Haltestruktur gehalten sind, die gleiche Brennstoffmenge untergebracht werden kann wie bei den herkömmlichen Lösungen.

## Patentansprüche

1. Brennstab für ein Brennelement eines Druckwasser-Kernreaktors, welcher Brennstab (2) ein Hüllrohr (6) von vorgegebenem Außendurchmesser (dₐ) und von vorgegebenem Innendurchmesser (dᵢ) sowie im Hüllrohr (6) enthaltene Pellets (8) von vorgegebenem Außendurchmesser (D) umfaßt, und welcher Brennstab (2) im Brennelement in einem vorgegebenen Mittelpunktsabstand (p) zum benachbarten Brennstab (2) anzuordnen ist, **dadurch gekennzeichnet,** daß das Verhältnis (p/dₐ) zwischen dem vorgegebenem Mittelpunktsabstand (p) und dem Außendurchmesser (dₐ) des Hüllrohrs (6) im Bereich von p/dₐ = 1,35 bis 1,37 liegt.

2. Brennstab nach Anspruch 1, **dadurch gekennzeichnet,** daß der vorgegebene Außendurchmesser (dₐ) dₐ = 9,36 mm oder dₐ = 10,53 mm beträgt.

3. Brennstab nach Anspruch 1 oder 2, **dadurch gekennzeichnet,** daß der Mittelpunktsabstand (p) p = 12,7 mm oder 14,3 mm beträgt.

4. Brennstab nach einem der Ansprüche 1 bis 3, **dadurch gekennzeichnet,** daß der vorgegebene Innendurchmesser (dᵢ) des Hüllrohrs (6) dᵢ = 8,22 mm oder dᵢ = 9,30 mm beträgt.

5. Brennelement nach einem der Ansprüche 1 bis 4, **dadurch gekennzeichnet,** daß der Außendurchmesser (D) der Pellets (8) 8,05 mm oder 9,11 mm beträgt.

## Claims

1. Fuel rod for a fuel element of a pressurized water nuclear reactor, which fuel rod (2) comprises a cladding tube (6) of given outside diameter (dₐ) and of given inside diameter (dᵢ) and also pellets (8) contained in the cladding tube (6) of given outside diameter (D) and which fuel rod (2) is to be arranged in the fuel element at a given distance (p) between centres from the adjacent fuel rod (2), characterised in that the ratio (p/dₐ) between the given distance (p) between centres and the outside diameter (dₐ) of the cladding tube (6) lies in the range of p/dₐ = 1.35 to 1.37.

2. Fuel rod according to claim 1, characterised in that the given outside diameter (dₐ) amounts to dₐ = 9.36 mm or dₐ = 10.53 mm.

3. Fuel rod according to claim 1 or 2, characterised in that the distance (p) between centres amounts to p = 12.7 mm or 14.3 mm.

4. Fuel rod according to one of the claims 1 to 3, characterised in that the given inside diameter (dᵢ) of the cladding tube (6) amounts to dᵢ = 8.22 mm or dᵢ = 9.30 mm.

5. Fuel element according to one of the claims 1 to 4, characterised in that the outside diameter (D) of the pellets (8) amounts to 8.05 mm or 9.11 mm.

## Revendications

1. Crayon combustible pour assemblage combustible d'un réacteur nucléaire à eau sous pression, ce crayon combustible (2) ayant un tube de gainage (6) d'un diamètre extérieure (dₐ) prescrit et d'un diamètre intérieur (dᵢ) prescrit, ainsi que des pastilles (8) de diamètre extérieur (D) prescrit contenues dans le tube de gainage (6) et ce crayon combustible (2) étant disposé dans l'assemblage combustible, de sorte que la distance (p) entre son centre et le centre d'un crayon combustible (2) voisin soit prescrite, caractérisé en ce que le rapport (p/dₐ) entre la distance (p) prescrite entre les centres et le diamètre extérieur (dₐ) du tube de gainage (6) est compris entre p/dₐ = 1,35 et 1,37).

2. Crayon combustible suivant la revendication 1, caractérisé en ce que le diamètre extérieur (dₐ) prescrit est égal à 9,36 mm ou à 10,53 mm.

3. Crayon combustible suivant la revendication 1 ou 2, caractérisé en ce que la distance (p) entre les centres est égale à 12,7 mm ou à 14,3 mm.

4. Crayon combustible suivant l'une des revendications 1 à 3, caractérisé en ce que le diamètre intérieur (dᵢ) prescrit du tube de gainage (6) est égal à 8,22 mm ou à 9,30 mm.

5. Crayon combustible suivant l'une des revendications 1 à 4, caractérisé en ce que le diamètre extérieur (D) des pastilles (8) est égal à 8,05 mm ou à 9,11 mm.
